# EUROPEAN PATENT APPLICATION

(11) **EP 2 213 452 A1**
(43) Date of publication of application: **04.08.2010**
(21) Application number: 08837717.1
(22) Date of filing: 02.10.2008
(51) Int. Cl.: B32B 27/00, B32B 7/02, C03C 27/12

(54) **PLASTIC FILM WITH INFRARED REFLECTIVE FILM AND LAMINATED GLASS WITH INSERTED PLASTIC FILM**

(30) Priority: 11.10.2007 JP 2007265813
(71) Applicant: Central Glass Company, Limited, Yamaguchi 755-0001 (JP)
(72) Inventor: TAKAMATSU, Atsushi c/o Glass Research Center, Matsusaka-shi, Mie 515-0001 (JP); IZUTANI, Kensuke, c/o Glass Research Center, Matsusaka-shi, Mie 515-0001 (JP); YONEKURA, Masaaki c/o Glass Research Center, Matsusaka-shi, Mie 515-0001 (JP)
(74) Representative: Manitz, Gerhart
(86) International application number: PCT/JP2008/067902
(87) International publication number: WO 2009/048010

(57) **Abstract**

[Summary]

[Problem] In case of producing a plastic film-inserted laminated glass by forming an infrared rays reflection functioning film on a transparent plastic film and then by interposing the plastic film between intermediate films, an adhesion between the plastic film and the intermediate film is not good thereby causing such a problem that a peeling occurs upon collision.

[Solving Means] A silane coupling film is formed on a surface where no infrared rays reflection film is formed, of a plastic film, and a hard coat layer is formed between the plastic film and the infrared rays reflection film.

## Description

### TECHNICAL FIELD

This invention relates to a laminated film produced by laminating an intermediate film, an infrared rays reflection film and an intermediate film in this order.

### BACKGROUND ART

As a laminated grass having a heat ray reflecting function, one in which two glass plates are laminated using two intermediate films between which a plastic film, particularly a polyethylene terephthalate film, is interposed is known.

Usually, a laminated glass is treated at a high temperature and at a high pressure by using an autoclave, in which a glass plate and a polyester film are thermally adhered to each other with an intermediate film.

For example, Patent Citation 1 discloses a laminated glass which is formed to be laminated by interposing a flexible laminate between two glass plates, the flexible laminate being formed by interposing a heat ray reflection plastic film produced by forming a thin film on a polyester film, between two intermediate films.

Patent Citation 2 discloses coating an amino-based silane coupling agent on a polyester film when a polyvinyl acetal resin and a polyester film are laminated, thereby to improve a mechanical strength of an interface.

Additionally, Patent Citation 3 discloses coating an amino-based silane coupling agent on a polyester film thereby to form a hard coat layer.
Patent Citation 1: Japanese Patent Provisional Publication No. 56-32352
Patent Citation 2: Japanese Patent Provisional Publication No. 2001-106556
Patent Citation 3: Japanese Patent Provisional Publication No. 2004-195741

### DISCLOSURE OF INVENTION

### PROBLEMS TO BE SOLVED BY INVENTION

However, in case of producing a plastic film-inserted laminated glass by forming an infrared rays reflection functioning film on a transparent plastic film and then by interposing the plastic film between intermediate films, an adhesion between the plastic film and the intermediate film is not good thereby causing such a problem that a peeling occurs upon collision.

An object of the present invention is to provide a plastic film provided with an infrared rays reflection film and a laminated glass which do not cause the problem of peeling.

### MEANS FOR SOLVING PROBLEM

A first aspect of the present invention resides in a plastic film provided with an infrared rays reflection film, produced by forming an infrared reflection film on one side surface of a plastic film and by forming a silane coupling film on the other side surface of the plastic film.

Additionally, a second aspect of the present invention resides in a plastic film provided with an infrared rays reflection film, as described in the first aspect, in which a hard coat layer is laminated between the plastic film and the infrared rays reflection film.

Additionally, a third aspect of the present invention resides in a plastic film provided with an infrared rays reflection film, as described in the first aspect, in which the infrared rays reflection film is a metal film or a multi-layer film of dielectric material.

Additionally, a fourth aspect of the present invention resides in a plastic film provided with an infrared rays reflection film, as described in the first aspect, in which the dielectric material is selected from TiO₂, Nb₂O₃, Ta₂O₅, SiO₂, Al₂O₃, ZrO₂ and MgF₂.

Additionally, a fifth aspect of the present invention resides in the above-mentioned plastic film provided with an infrared rays reflection function, in which the dielectric material is a dielectric material selected from TiO₂, Nb₂O₃, Ta₂O₅, SiO₂, Al₂O₃, ZrO₂, and MgF₂.

Additionally, a sixth aspect of the present invention resides in a plastic film-inserted laminated glass produced by interposing the plastic film between two intermediate films, in which the plastic film is the above-mentioned plastic film provided with the infrared rays reflection film.

### EFFECTS OF INVENTION

A plastic film provided with an infrared rays reflection film, according to the present invention provides a highly functional laminated glass which is high in adhesion strength to an intermediate film and can provide an infrared rays reflection function to a front windshield glass of an automotive vehicle and a building's window having an anticrime function and is high in heat shielding ability, in a plastic film inserted-laminated glass produced by interposing a plastic film having a near infrared rays reflection function between two intermediate films.

### BEST MODE FOR CARRYING OUT INVENTION

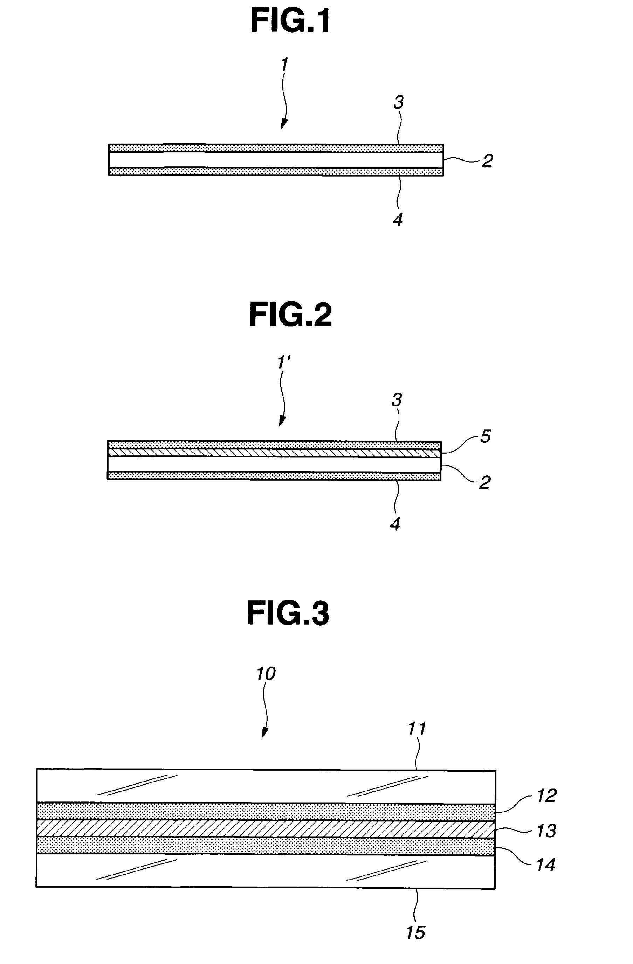

A plastic film provided with a near infrared rays reflection function according to the present invention has such a configuration that an infrared rays reflection film 3 is formed on one side surface of a plastic film 2, and a film 4 of a silane coupling agent is laminated on the other side surface of the plastic film, as shown in Fig. 1.

It is important that the plastic film 2 is transparent in case of being used for a window of a building and of a vehicle, particularly in case of being used for a front windshield glass of an automotive vehicle.

As the transparent plastic film, a polyester film such as a polyethylene terephthalate (PET) film, a polyethylene naphthalate film and the like, an polyimide film, a tack film, a nylon film, a polycarbonate film, polymethyl methacrylate, polyether sulphone, polyallylate, cycloolefin polymer, and the like can be preferably used.

Additionally, a plastic film produced by a drawing process, such as a PET film is relatively high in strength and therefore can suppress a defect such as a folding-down of a film occurred by a treatment during a laminating processing and can suppress formation of spherical crystals under heating thereby suppressing a white turbidity, which is preferable.

As the infrared rays reflection film, a single layer film of a metal or a multi-layer film of a dielectric material is preferably used.

As the metal film, at least one metal selected from Al, Cu, Ag, Au, Ni, Pt, Cr, Mo, W, V, Nb, Ta, Mn or an alloy of the at least one metal is preferably used. Additionally, SUS may be used.

As the multi-layer film of a dielectric material for reflecting infrared rays, a multi-layer film obtained by alternately and repeatedly laminating a film having a high refractive index and a film having a low refractive index is preferable, each film being formed of a dielectric material selected from TiO₂, Nb₂O₃, Ta₂O₅, SiO₂, Al₂O₃, ZrO₂, and MgF₂.

It is preferable that a dielectric material selected from TiO₂, Nb₂O₃ and Ta₂O₅ is used for the film having a high refractive index while a dielectric material selected from SiO₂, Al₂O₃, ZrO₂ and MgF₂ is used for the film having a low refractive index.

The number of layers of the multi-layer film of dielectric material is preferably between 4 layers and 11 layers. If the number of layers of the multi-layer film is not larger than 3 layers, reflection in a near infrared rays range is insufficient. If the number of the layers is not less than 12 layers, a production cost rises, a plastic film curls upon an increase of a membrane stress thereby making a treatment difficult, and a problem arises in durability. Therefore, it is preferable to be not less than 4 layers and not more than 11 layers.

The metal film or the multi-layer film of dielectric material is formed on a plastic film by a sputtering. Concerning other film formation processes than the sputtering, a film formation may be made by a vapor deposition process or an ion plating process in case of the metal film, while a film formation may be made by a CVD process, a vapor deposition process, an ion plating process or the like in case of the dielectric material.

The silane coupling agent serves to improve an adhesion between the plastic film and the intermediate film, in which a silane coupling agent having amino group, isocyanate group, epoxy group and/or the like may be used as the silane coupling agent.

Formation of a film of the silane coupling agent may be made by using a known process such as a dipping process, a roll coating process, a spraying process or the like.

Further, as shown in Fig. 2, it is preferable to provide a hard coat layer 5 between the plastic film 2 and the infrared rays reflection film 3 in order to improve an adhesion between the plastic film 2 and the infrared rays reflection film 3 when the infrared rays reflection film 3 is formed on the plastic film 2.

Materials for forming the hard coat layer 5 are not particularly limited. In concrete, it is preferable to use a thermosetting resin and/or an ionizing radiation curable resin as the materials for forming the hard coat layer. In concrete, the materials for forming the hard coat layer, to be preferably used, contain acrylate-based functional group, and contain a relatively large amount of, for example, oligomer or prepolymer of (meth)acrylate (acrylate and methacrylate are hereinafter referred to as (meth)acrylate) and/or the like of relatively low molecular weight polyester, polyether, acrylic resin, epoxy resin, polyurethane, alkyd resin, spiroacetal resin, polybutadiene, polythiol-polyene-based resin, a multifunctional compound such as polyhydric alcohol or the like; a monofunctional monomer such as ethyl (meth)acrylate as a reactive diluent, ethylhexyl (meth)acrylate, styrene, vinyl toluene, N-vinylpyrrolidone or the like; and a multifunctional monomer such as trimethylolpropane tri(meth)acrylate, hexanediol (meth)acrylate, tripropyleneglycol di(meth)acrylate, diethyleneglycol di(meth)acrylate, pentaerythritol tri(meth)acrylate, dipentaerythritol hexa(meth)acrylate, 1,6-hexanediol di(meth)acrylate, neopentylglycol di(meth)acrylate or the like.

The hard coat layer can be also coated by a process similar to that of the film formation of silane coupling agent.

A laminated glass 10 shown in Fig. 3 is produced by using a plastic film 13 provided with an infrared rays reflection film according to the present invention, and can be preferably used as a window glass for an opening section.

The plastic film 13 provided with a heat ray reflection film is interposed between an intermediate film 12 and an intermediate film 14, and then this is interposed between glass plates 11, 15 and subjected to a pressure-treatment at 130 °C by using an autoclave thereby producing a laminated glass 13.

For the glass plates 11, 15, soda lime glass which is obtained at a low cost by using a float process is conveniently used.

For the intermediate films 12, 14, a hot melt type adhesive such as polyvinyl butyral (PVB), ethylene vinylacetate (EVA) or the like is preferably used.

### EXAMPLES

Hereinafter, the present invention will be discussed with reference to the drawing.

### Example 1 (production of a plastic film provided with a heat ray reflection film) + (a laminated glass)

A polyethylene terephthalate film (PET film) having a thickness of 100 µm was used as the plastic film 2, thereby producing the plastic film 1 provided with the heat ray reflection film, having a configuration as shown in Fig. 1.

A film having a thickness of 1 µm was formed on one side surface of the PET film, with a silane coupling agent having amino group.

A Nb₂O₃ film (having a thickness of 115 nm), a SiO₂ film (having a thickness of 175 nm), a Nb₂O₃ film (having a thickness of 115 nm), a SiO₂ film (having a thickness of 175 nm), a Nb₂O₃ film (having a thickness of 115 nm), a SiO₂ film (having a thickness of 175 nm) and a Nb₂O₃ film (having a thickness of 115 nm) were successively formed on the other side surface of the PET film by a sputtering so as to form an infrared rays reflection film, thereby obtaining the plastic film provided with the heat ray reflection film as shown in Fig. 1.

Further, using the produced plastic film provided with the heat ray reflection film, the glass plate 11, the intermediate film 12, the plastic film 13 provided with the heat ray reflection film, an intermediate film 14 and the glass plate 15 were successively placed one upon another and heated for 30 minutes at 130 °C in an autoclave, and then were subjected to a pressuring deaeration to accomplish a laminating processing, thus producing a plastic film-inserted laminated glass 10.

It was confirmed that the produced plastic-inserted laminated glass did not make a peeling between the intermediate film and the plastic film in an impact test so that a sufficient adhesion was made between the plastic film and the intermediate film.

### Example 2 (production of a plastic film 1' provided with a heat ray reflection film) + a laminated glass

A plastic film 1' provided with a heat ray reflection film as shown in Fig. 2 was formed wholly in the same manner as in Example 1 with the exception that the acrylic hard coat layer 5 is formed between the plastic film 2 and the infrared rays reflection film.

Further, a laminated glass was produced in the same manner as in Example 1, and it was confirmed that no peeling occurs between the intermediate film and the plastic film in an impact test so that a sufficient adhesion was made between the plastic film and the intermediate film.

### BRIEF DESCRIPTION OF THE DRAWING

[Fig. 1] is a sectional view showing a configuration of a plastic film provided with a near infrared rays reflection film, according to the present invention.
[Fig. 2] is a sectional view showing another configuration of the plastic film provided with the near infrared rays reflection film, according to the present invention.
[Fig. 3] is a sectional view of a laminated glass produced using the plastic film provided with the near infrared rays reflection film, according to the present invention.

### EXPLANATION OF REFERENCE NUMERALS

- 1, 1': a plastic film provided with an infrared rays reflection film
- 2: a plastic film
- 3: an infrared rays reflection film
- 4: a silane coupling agent
- 5: a hard coat layer
- 10: a laminated glass
- 11: a glass plate
- 12: an intermediate film
- 13: a plastic film provided with a heat ray reflection film
- 14: an intermediate film
- 15: a glass plate

## Claims

1. A plastic film provided with an infrared rays reflection film, comprising a plastic film, an infrared rays reflection film formed on one side surface of the plastic film, and a silane coupling film formed on the other side surface of the plastic film.

2. A plastic film provided with an infrared rays reflection film, as claimed in Claim 1, wherein a hard coat layer is laminated at an interface between the plastic film and the infrared rays reflection film.

3. A plastic film provided with an infrared rays reflection film, as claimed in any of Claims 1 and 2, wherein the infrared rays reflection film is a metal film formed mainly of at least one selected from the group consisting of Al, Ag, Au, Pt, SUS, Cr, Mo, W, Nb and Ta.

4. A plastic film provided with an infrared rays reflection film, as claimed in any of Claims 1 and 2, wherein the infrared rays reflection film is a multi-layer film formed of 4 layers to 11 layers which are formed by alternately laminating a dielectric material having a low refractive index and a dielectric material having a high refractive index.

5. A plastic film provided with an infrared rays reflection film, as claimed in Claim 4, wherein the dielectric material is selected from the group consisting of TiO₂, Nb₂O₃, Ta₂O₅, SiO₂, Al₂O₃, ZrO₂ and MgF₂.

6. A plastic-inserted laminated glass produced by interposing a plastic film between two intermediate films, wherein the plastic film is the plastic film provided with the infrared rays reflection film as claimed in any of Claims 1 to 5.
